Europäisches Patentamt

(19) European Patent Office

Office européen des brevets

(11) Publication number: **0 094 399**
**B1**

(12) **EUROPEAN PATENT SPECIFICATION**

(45) Date of publication of patent specification: **22.07.87**

(21) Application number: **82903369.5**

(22) Date of filing: **12.11.82**

(86) International application number:
**PCT/SE82/00383**

(87) International publication number:
**WO 83/01831 26.05.83 Gazette 83/13**

(51) Int. Cl.⁴: **F 24 J 2/22, F 24 J 2/36**

(54) **SOLAR HEAT ABSORBING DEVICE.**

(30) Priority: **16.11.81 SE 8106768**

(43) Date of publication of application:
**23.11.83 Bulletin 83/47**

(45) Publication of the grant of the patent:
**22.07.87 Bulletin 87/30**

(84) Designated Contracting States:
**AT CH DE FR GB LI NL SE**

(56) References cited:
**FR-A-2 452 073**
**US-A-3 022 781**
**US-A-4 172 444**
**US-A-4 287 876**

(73) Proprietor: **Stranicky, Fedor**
**Ankdammsgatan 29**
**S-171 43 Solna (SE)**

(72) Inventor: **Stranicky, Fedor**
**Ankdammsgatan 29**
**S-171 43 Solna (SE)**

(74) Representative: **Omming, Allan**
**A. OMMING & CO. AB Sveavägen 28-30**
**S-111 34 Stockholm (SE)**

Courier Press, Leamington Spa, England.

## Description

The present invention relates to a solar-heat absorbing device comprising first and second elongated, flexible lengths of material placed one upon the other and joined together along their edges by continuous longitudinally extending lines and between said lines by a plurality of parallel, longitudinally extending lines, all said lines comprising integrally formed upstanding ribs to form fluid channels between said first and second lengths of material. The device is primarily intended for use in the construction of solar-collector systems covering large areas, including a heat absorber section having high heat-absorbing and heat-transmission properties, and a base section having heat insulating properties where both the absorber section and the base section are flexible and can be rolled-up on bobbins, and where the absorber section is fully resistant to corrosion attack by water having a high salt content and is able, at the same time, to withstand high temperatures. The device, however, can also be used, to advantage, as a solar collector in roof or outer-wall structures of buildings.

In the thermodynamic conversion of solar energy to electricity and/or the desalination of salt water, a collector array having a surface area in the order of 15,000 m² is required to produce 1 MW of electricity. In addition to this collector array, there is required a further collector surface area of 50,000 m² for short term solar-heat storage, in order to allow the plant to be operated for 24 hours a day, which is a condition for acceptable viability. Calculated per square meter, solar-energy collectors known today are excessively expensive, and are difficult to transport and erect and instal in remote and difficultly reached geographical locations, which applies to the majority of countries in the equatorial belt. Above all, the known collectors possess unsatisfactory properties with regard to their efficiency and their resistance to corrosion against sea water of high salt content in combination with temperatures reaching from 80 to 90°C.

A known solar energy collector of this type is shown in the FR—A—2 452 073 and comprises two sheets of non-resiliant plastics material. An upper sheet is intended to be exposed to the solar radiation and is rather thick. A base sheet presents integrally formed longitudinal mutually parallel upstanding ribs to which the upper sheet is heat-sealed. Two continuous ribs are located along the edges of the base sheet to form a fluid passage between the sheets and a plurality of non-continuous ribs are heated between the continuous ribs to form spacer means in the fluid passage between the upper sheet and the base sheet. A serious drawback of this known solar collector is the poor heat-absorbing and heat-transmission properties to the upper plastic sheet. Another drawback is to be seen in the fact that neither the upper sheet nor the base sheet separated by the spacer means, consists of resiliant material. Consequently, this solar collector is not suitable as a roll-up/roll-out large area collector. A further drawback is related to the fact that heat-sealing joints of plastic sheets does not withstand heat up to 100°C and tension corresponding to service water pressure in said fluid passage between the upper sheet and the base sheet of the known solar collector for a long time period.

The object of the invention is to eliminate all of the aforementioned disadvantages. This object has been realized with a solar-heat absorbing device having the characteristics set forth in the Claims. Thus, the solar-heat absorbing device according to the invention has an absorber which is made of a corrosion-resistant material having a high heat-passage number, and which, subsequent to being completed in the factory or plant, can be rolled-up onto bobbins and then unrolled at a selected site, the square-meter price of the collector on site not exceeding 150 Swedish Crowns. In turn this enables prices of between 20—30 Swidish Ore per kilowatt hour to be achieved when converting solar energy to electricity thermodynamically, and also provides for low prices per cubic meter of desalinated sea water. In accordance with the invention, the absorber device may, for example, comprise a 0.10—1.15 mm thick copper foil and a corresponding rubber foil of suitable width placed one upon the other and sealingly joined along the plurality of ribs to form the third passages for either water, air or some other medium to be heated by solar energy. The absorber device thus constructed and comprising a thin metal sheet and a resilient base sheet can be readily rolled-up on bobbins during manufacture, and then when placed in position on site can be unrolled and supplied with the fluid to be heated. Experiments have shown that the most difficult step in the manufacture of such absorbers is that of joining thin metal foils and rubber foils. Different methods have been tested, such as bonding with bonding resins or adhesives of silicone type. Neither of these adhesives has been found suitable in conjunction with water at temperatures reaching 80—90°C. In accordance with the invention, these difficulties encountered in manufacture can be eliminated by using a heat-resistant rubber sheet which by vulcanizing along continuous lines to a thin metal foil joins together in a flexible and heat-tolerable fashion. It is known that when rubber is vulcanized on metal, rubber diffuses into the outer surface of the metal, thereby to create an extremely strong joint. Since rubber also can be vulcanized onto plastics and other materials, the combination possibilites are prolific with respect to the upper part of the absorber, which is turned to face the solar radiation. The absorber section can, for instance, be completed with a transparent cover material. The absorber section and the cover can, in both cases, be rolled-up onto bobbins during manufacture, and then unrolled from the bobbins on site, which is one of the prerequisites for obtaining a low total price for solar collectors calculated per square meter when incorporated in wide collector arrays. All of the aforementioned properties are also of value in solar collectors intended for installation on roofs and outer-wall structures of buildings.

The invention will now be described in more detail with reference to the accompanying drawings, which illustrate the mode of use of the invention.

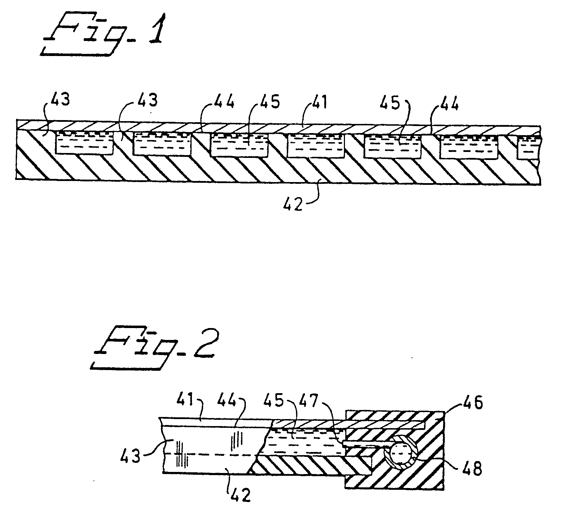

Figure 1 is a cross-sectional view of a preferred solar collector according to the invention, and Figure 2 is a side view, partially in section of a connection to one end of the collector illustrated in Figure 1.

Figures 1 and 2 illustrate a highly efficient, preferred embodiment of a solar collector according to the invention intended especially for installation on the roof and/or outer-wall structure of a building. In this embodiment the heat-absorbing section comprises a thin metal sheet 41 to which a rubber mat 42 having a plurality of upstanding ribs 43 is firmly vulcanized at surfaces 44. Formed between the ribs 43 is a plurality of passages 45 having a width of at most about 10 mm and a depth of about 2—3 mm. A connecting block 46 made of rubber and having a connecting pipe 47 protruding into respective passages 45 is sealingly vulcanized to the ends of said metal sheet 41 and said mat 42. The connecting pipes 47 extend from a distributor pipe 48 connected to a pipe-line (not shown) from which the circulation water of the solar collector is supplied. The pipes 47 and 48 are also vulcanized in the block 46. In this embodiment, the rigidity of the metal sheet 41 and the rubber mat 42 is such that the passages 45 will not be deformed to any great extent by the pressure of the water in said passages. This ensures a high degree of efficiency in operation, and enables the solar collector to be readily mounted on the roof or walls of a building, substantially by bonding to the support structure, for example to a sheet-metal roof.

Wide possibilities in variation are possible to obtain significant reductions in price per square meter of solar collector in relation to solar collectors known hitherto. Preferably, such a reduction in price is achieved with respect to the absorber section of the collector, while retaining maximum heat-transmission ability, resistance to corrosion and to heat, by making the upper part of the collector, said upper part being exposed to solar radiation, from copper foil, for example, and the lower part from inexpensive aluminium foil or galvanized, thin iron sheet, which may be coated with a layer of rubber, thereby providing the lower part of the collector with the same resistance to corrosion as that exhibited by the much more expensive copper foil. Thus, the rubber layer on the lower part of the absorber section can be used as a means of sealingly connecting the lower part of the absorber section to the upper part thereof, by vulcanizing at suitable locations. This possibility of vulcanizing the upper, solar-heat receiving part of the absorber to the lower part thereof can also be achieved with other material combinations possible which minimizes the total price of the absorber and therewith also the solar collector.

### Claims

1. A solar-heat absorbing device comprising first and second elongated, flexible lengths of material (41, 42) placed one upon the other and joined together along their edges by continuous longitudinally extending lines and intermediate said lines by a plurality of parallel, longitudinally extending lines, all said lines comprising integrally formed upstanding ribs (43) of the second length of material (42) forming fluid passages between said lengths of material (41, 42), characterized in that the first length of material (41) comprises a thin metal sheet positioned to be exposed to solar radiation formed, for example, of copper, brass, stainless steel or the like, the second length of material (42) comprising a heat-resistant rubber material with the ribs (43) extending continuously from one end portion of the elongated device to the other end portion onto which ribs (43) the first material length (41) is firmly vulcanized forming separated passages (45) extending between said ribs (43), said end portions of the elongated device being enclosed each by a connecting block (46) sealingly joined to said end portions.

2. A device according to claim 1, characterized in that the two material lengths (41, 42) are of such rigidity and the ribs (43) are located with such small spaces (45) therebetween that the material lengths will not be deformed to any substantial extent by the pressure exerted by the fluid on the walls of said passages.

### Patentansprüche

1. Vorrichtung zum Absorbieren der Sonnenwärme mit einem ersten und einem zweiten langgestreckten Materialabschnitt (41, 42) die aufeinandergelegt und entlang ihrer Kanten miteinander verbunden sind, und zwar durch fortlaufende, sich in Längsrichtung erstreckende Linien und zwischen diesen Linien durch eine Anzahl von parallelen, sich in Längsrichtung erstreckenden Linien, wobei alle diese Linien einteilig angeformte, aufragende Rippen (43) des zweiten Materialabschnittes (42) Flüssigkeitskanäle zwischen den Materialabschnitten (41, 42) bilden, dadurch gekennzeichnet, daß der erste Materialabschnitt (41) ein dünnes Blech umfaßt, das derart angeordnet ist, daß es der Sonnenstrahlung ausgesetzt ist, und das beispielsweise aus Kupfer, Messing, rostfreiem Stahl oder dergleichen besteht, daß der zweite Materialabschnitt (42) einen wärmewiderstandsfähigen Gummiwerkstoff umfaßt, dessen Rippen (43) sich kontinuierlich von einem Endbereich der langgestreckten Vorrichtung zum anderen Endbereich erstrecken, auf welchen Rippen (43) des ersten Materialabschnittes (41) fest aufvulkanisiert sind und getrennte Kanäle (45) bilden, die sich zwischen den genannten Rippen (43) erstrecken, und daß die genannten Endbereiche der langgestreckten Vorrichtung jeweils durch einen Verbindungsblock (46) umschlossen sind, der mit den genannten Endbereichen dichtend verbunden ist.

2. Vorrichtung nach Anspruch 1, dadurch gekennzeichnet, daß die beiden Materialabschnitte (41, 42) derart steif sind und die Rippen (43) zwischen derart kleinen, dazwischen befindlichen Zwischenräumen (45) angeordnet sind, daß die Materialabschnitte durch den Druck, der durch die Flüssigkeit auf die Wände der Kanäle ausgeübt wird, keine nennenswerten Verformungen erleiden.

## Revendications

1. Dispositif d'absorption de chaleur solaire comprenant une première et une seconde longueurs souples de matériau allongé (41, 42) posées l'une sur l'autre et assemblées le long de leurs bords par des lignes continues orientées longitudinalement et entre lesdites lignes par une pluralité de lignes parallèles orientées longitudinalement, toutes lesdites lignes comprenant en faisant partie intégrante des nervures (43) orientées vers le haut à partir de la seconde longueur de matériau (42) constituant des passages pour fluides entre lesdites longueurs de matériau (41, 42), caractérisé en ce que la première longueur de matériau (41) est constituée d'une mince tôle métallique placée de manière à être exposée au rayonnement solaire, et constituée, par exemple, de cuivre, de laiton, d'acier inoxydable ou analogue, la seconde longueur de matériau (42) étant constituée d'un matériau en caoutchouc résistant à la chaleur avec des nervures (43) s'étendant de manière continue d'une portion d'extrémité du dispositif allongé à l'autre portion d'extrémité, et sur lesquelles nervures (43) la première longueur de matériau (41) est solidement vulcanisée en formant des passages distincts (45) s'étendant entre lesdites nervures (43), lesdites portions d'extrémité du dispositif allongé étant fermées chacune par un bloc de raccordement (46) assemblé de manière étanche auxdites portions d'extrémité.

2. Dispositif selon la revendication 1, caractérisé en ce que les deux longeurs de matériau (41, 42) ont une rigidité telle et les nervures placées avec des espaces si petits (45) entre elles, que les longueurs de matériau ne seront pas du tout déformées sous l'effet de la pression exercée par le fluide sur les parois desdits passages.

*Fig-1*

43  43  44  45  41  45  44

42

*Fig-2*

41  44  45  47  46

43  42  48